# EUROPEAN PATENT APPLICATION

(11) **EP 3 103 758 A1**
(43) Date of publication of application: **14.12.2016**
(21) Application number: 16172587.4
(22) Date of filing: 02.06.2016
(51) Int. Cl.: B66F 9/065, B62D 21/18

(54) **ARRANGEMENT OF THE FRAME STRUCTURE OF A MOBILE REACH MACHINE**

(30) Priority: 10.06.2015 FI 20155444
(71) Applicant: SKS Toijala Works Oy, 37800 Akaa (FI)
(72) Inventor: Korpimaa, Heikki, 37800 Akaa (FI)
(74) Representative: Kolster Oy Ab

(57) **Abstract**

There is proposed a frame (3) of a mobile reach machine (1). Said frame (3) comprises a longitudinal body part (18) and a transverse body part (19) at a front end portion (3a) of the longitudinal body part. A rear end portion (3b) comprises a mounting bracket (11) extending upwardly. A front part of the longitudinal body part is arranged asymmetrically relative to a centre line (20) of the main frame.

There is also proposed a reach machine (1) having such a frame (3).

## Description

### Background of the invention

The invention relates to a frame of a mobile reach machine.

The invention further relates to a reach machine.

The field of the invention is defined more specifically in the preambles of the independent claims.

Reach machines are mobile material handling vehicles, which are typically used in freight terminals and in different loading and unloading sites. The reach machines are capable of lifting and transporting loads such as containers, trailers and sheet metal coils, for example. Depending on the load handling tools and means, the reach machine may also be suitable for handling bulk material such as logs. The reach machine comprises a carrier and a boom hinged to the carrier. The boom is arranged above the carrier and is in longitudinal direction of the reach machine. The carrier comprises a longitudinal main frame and is typically provided with rubber tires. The carrier is further provided with one or more energy devices mounted on the main frame. The known solutions relating to the frame structures of the reach machines have shown to contain some disadvantages.

### Brief description of the invention

An object of the invention is to provide a novel and improved frame of a reach machine and to a mobile reach machine provided with the same.

The frame according to the invention is characterized by features of characterizing portion of independent first apparatus claim.

The reach machine according to the invention is characterized by features of characterizing portion of independent second apparatus claim.

An idea of the disclosed solution is that a main frame of a reach machine comprises a longitudinal body part. At least a front part of the longitudinal body part of the frame is located asymmetrically in relation to a longitudinal central axis of the reach machine. In other words, the centre line of the longitudinal body part is located at a lateral distance from centre line of the frame. Thereby, opposite side surfaces of the front part of the longitudinal body part are located at different lateral distances from lateral outer surfaces of the reach machine. Furthermore, at a front end of the longitudinal body part is a transversal body part, whereby the shape of the frame resembles asymmetric letter T when seen from above. Further, the longitudinal centre line of the frame passes through a longitudinal middle point of the transverse body part.

The main frame further comprises at least one mounting place on both side surfaces of the front part of the longitudinal body part. Because of the asymmetrical structure, side surfaces of the mounting places facing into opposite directions are at different transversal distances from longitudinal central axis of the reach machine.

An advantage of the disclosed solution is that the asymmetrical positioning of the front part of the longitudinal body part provides more space for mounting needed devices on a side of the main frame. Thanks to the asymmetrical positioning of the mounting places, energy modules, power packs, or other modules having different size, and especially different lateral dimensions, may be arranged on opposing sides of the main frame.

According to an embodiment, the front part of the longitudinal body part is narrower in lateral direction compared to a section of a main frame where the mounting bracket is located. The front part of the longitudinal body part may be relatively narrow for the whole distance between the transversal body part and the mounting bracket.

According to an embodiment, the front part of the longitudinal body part, which is asymmetrically located, extends from the transverse body part to the mounting bracket. The mounting bracket is located symmetrically at the centre line of the frame. A rear part of the frame extending from the mounting bracket towards the rear end of the frame may also be located symmetrically on the centre line of the frame.

According to an embodiment, the transverse body part is provided with first mounting points configured to support at least one transversal rigid front axle to the frame. The rear end portion of the longitudinal body part comprises second mounting points for connecting a steerable transversal rear axle setting to the frame.

According to an embodiment, the main frame comprises at least one mounting place on at least one side surface of the front part of the longitudinal body part. Devices, containers, auxiliary machinery and preassembled units, modules or power packs may be mounted to the mounting place. The asymmetrical structure offers more free space, and especially more lateral width, for the mounted devices.

According to an embodiment, an energy module comprising one or more energy devices and a sub frame is formed, and one or more such modules are mountable to one or more lateral mounting places on one or more side surfaces of a main frame of a mobile reach machine. An advantage of the use of the one or more modules is that they may be equipped with needed devices and auxiliary components which are pre-connected to the sub frame of the module. Thus, the preassembled energy module may comprise all the needed devices and systems in one unity, which can be mounted and dismounted easily and fast. If the energy module fails, it may be dismounted and substituted by a new energy module. Thanks to this, down time of the reach machine may be short. The dismounted energy module may be transported to a workshop for repair and service. At the work shop the repair and service work may be carried out in good circumstances and by competent maintenance personnel. Further, the use of preassembled modules facilitates making updates to an energy system of the reach machine. Existing energy units may be substituted with new energy modules having different output capacity, operating principle, dimensions or utilizing new and improved technology.

According to an embodiment, the front part of the longitudinal body part is provided with at least one lateral first side surface and at least one lateral second side surface. Because of the asymmetrical structure of the longitudinal body part, the first side surface is located at a shorter distance from the centre line of the frame compared to the second side surface. The first side surface is provided with at least one first mounting place for fastening a first energy module to the frame, and the second side surface is provided with at least one second mounting place for fastening at least one second energy module to the frame.

According to an embodiment, the frame comprises at least one recess on one side surface of the front part of the longitudinal body part. Thanks to the recess, a wider mounting place may be provided for mounting devices or modules to the side of the main frame.

According to an embodiment, at least the longitudinal body part of the main frame is a tubular piece provided with a closed outer shell. This type of structure is rigid and endures well loadings.

According to an embodiment, the cross-section of the longitudinal body part has a shape of a rectangle at least between the transverse body part and the mounting bracket, whereby the longitudinal body part has a box-type structure. The box-type structure is beneficial regarding stiffness. The structure is also relatively easy to manufacture.

According to an embodiment, the mounting bracket has a closed outer shell structure. The closed structure endures well loads. When the longitudinal body part and the mounting bracket both have closed structures, the frame may be simple, stiff and durable.

According to an embodiment, the mounting bracket comprises two bracket plates or side plates located at a transverse distance from each other. Further, between the bracket plates are several intermediate plates, such as front and rear plates, which together with the bracket or side plates form a closed outer shell structure for the mounting bracket.

According to an embodiment, the mounting bracket comprises two bracket plates located at a transverse distance from each other and forming lateral side surfaces of the mounting bracket. The longitudinal body part has two opposite side plates forming the lateral side surfaces of the longitudinal body part. The bracket plates are part of the side plates of the longitudinal body part, whereby the structures of the mounting bracket and the longitudinal body part are integrated.

According to an embodiment, the mounting bracket comprises two bracket plates or side plates located at a transverse distance from each other and forming lateral side surfaces of the mounting bracket. The longitudinal body part has two opposite side plates forming the lateral side surfaces of the front part of the longitudinal body part. Vertical lower end portions of the bracket plates are fastened against surfaces of the side plates of the longitudinal body part. The bracket plates may be mounted against outer, or alternatively, inner side surfaces of the side plates of the longitudinal body part. This embodiment is advantageous considering transmittance of loads between the mounting bracket and the longitudinal body part.

According to an embodiment, the boom connecting means are located at a top part of the mounting bracket and comprise a transverse opening passing through the mounting bracket, whereby the opening is configured to receive a connecting pin for connecting the boom pivotally to the frame. At a top of the mounting bracket may be two connecting lugs facing upwardly and comprising the transverse connecting openings.

According to an embodiment, the rear end portion of the longitudinal body part comprises a third mounting point for connecting a counterweight to the frame.

According to an embodiment, between the lateral first side surface and the lateral second side surface of the longitudinal body part is at least one transverse tubular connecting element. The tubular element is fastened to the side surfaces of the longitudinal body part, whereby the tubular element is configured to serve as a stiffener preventing buckling of the side surfaces. Both distal ends of the tubular connecting element are open on the lateral side surfaces, whereby an inner space of the tubular connecting element is also configured to serve as a lead-through for at least one cable, tube or hose.

The above-disclosed embodiments can be combined to form suitable solutions provided with necessary features disclosed in this patent application.

### Brief description of the figures

Some embodiments are described in more detail in the accompanying drawings, in which
Figure 1 is a schematic side view of a mobile reach machine,
Figure 2 is a schematic bottom view of a carrier of a reach machine,
Figure 3 is a schematic view of a main frame of a reach machine, and mounting places on both sides of the frame,
Figure 4 is a schematic view of the main frame of the Figure 3 seen in another position,
Figure 5 is a schematic view of a frame seen longitudinally towards a rear portion of the frame, and
Figure 6 is a schematic view showing a second side of the main frame.

For the sake of clarity, the figures show some embodiments of the disclosed solution in a simplified manner. In the figures, like reference numerals identify like elements.

### Detailed description of some embodiments

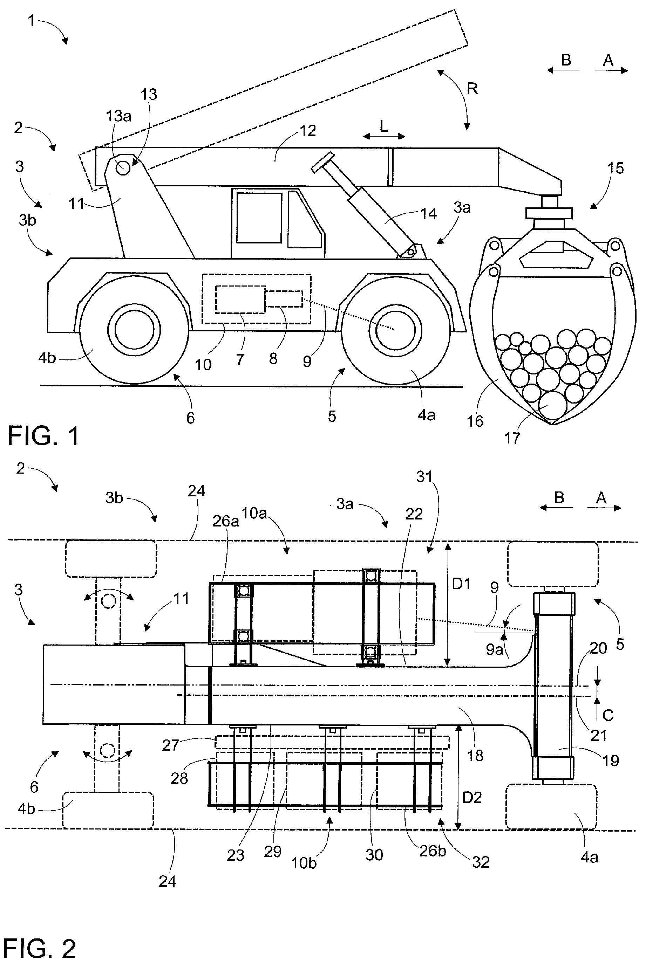

Figure 1 shows a reach machine 1 comprising a mobile carrier 2 provided with a main frame 3, and a plurality of wheels 4a, 4b. At a front end portion 3a of the main frame 3 may be a rigid non-steerable front axle 5 with front wheels 4a, and at the rear end portion 3b of the main frame 3 may be a steerable rear axle setting 6 with rear wheels 4b. The reach machine 1 may be front axle driven, whereby driving power may be transmitted from an energy device 7 via transmission means 8 to the front axle 5 by means of a cardan shaft 9. Alternatively, the power transmission may be hydraulic, for example. The energy device 7 of the reach machine 1 may comprise a combustion engine. The energy device 7 and the related auxiliary devices may be configured to form an energy module 10. The energy module 10 may be mounted against a side surface of the main frame 3. The energy module may be covered by means of side panels or cover elements.

The main frame 3 comprises a mounting bracket 11 at the rear end portion 3b for mounting a boom 12 above the carrier 2. The boom 12 is in a longitudinal direction of the reach machine 1 and may be located at the central axis of the machine. The boom 12 may be connected to the mounting bracket 11 by means of a horizontal joint 13 comprising a hinge pin 13a, or corresponding connecting element. The boom 12 may be pivoted R relative to the joint 13 by means of one or more lifting actuators 14, which may hydraulic cylinders, for example. Figure 1 illustrates by means of broken lines the boom 12 in a lifted position. A distal end portion of the boom 12 is provided with load carrying means 15. In the solution shown in Figure 1, the boom 12 comprises clamping means 16 for handling logs 17. Length of the boom 12 may be altered L telescopically. In Figure 1 forward driving direction is indicated by an arrow A and a reverse driving direction is indicated by an arrow B.

Figure 2 shows a carrier 2 of a reach machine seen from below. A main frame 3 may comprise a longitudinal body part 18 and a transversal body part 19, which is arranged at a front portion 3a of the main frame 3. Thereby, the main frame 3 may have a shape resembling letter T. The front axle 5 may be fastened to the transversal body part 19. At least the front part of the longitudinal body part 18 of the main frame 3 is located asymmetrically relative to centre line 20 of the main frame 3. The centre line 20 passes in a longitudinal direction of the main frame through a middle point of the transversal body part 19. The front portion of the longitudinal body part 19 has centre line 21, which is located at a transverse distance C from the centre line 20 of the main frame 3. The front part of the longitudinal body part 19 may be a tubular piece having a closed outer shell. The cross section of the front part of the longitudinal body part 19 has lateral side surfaces 22 and 23 facing into opposite directions. Since the body part 19 is positioned asymmetrically, the lateral side surfaces 22 and 23 are located at different transversal directions from outlines 24 passing longitudinally through outermost lateral surfaces of the reach machine. Then, the first side surface 22 is located at greater first lateral distance D1 from the outline 24 compared to second lateral distance D2 of the second side surface 23.

The side surfaces 22 and 23 may be provided with energy modules 10a, 10b. A first energy module 10a comprising a power generating device 25, such as a combustion engine, electrical motor or a hybrid power pack, may be mounted to the first side surface 22 by means of a sub frame 26a. The first energy module 10a may also comprise a hydraulic pump, transmission means and needed additional devices. The power generating device 25 and the hydraulic pump are examples of energy devices.

The second energy module 10b also comprises a sub frame 26b and pressure accumulators 27, fuel storages 28 and other storage elements 29 and 30 may be arranged to the sub frame 26b. The listed components 27, 28, 29 and 30 are also energy devices.

Thereby, the first side surface 22 may be provided with a first mounting place 31 and the second side surface 23 may be provided with a second mounting place 32. The first mounting place 31 comprises a larger free space for mounting the energy modules than the second mounting place 32. Typically, the power generating device 25 requires more space than the energy storage devices, wherefore the power generating device may be arranged to the first mounting place 31.

However, it is possible that the mounting places 22, 23 may be provided with any other kind or devices, machineries, auxiliary devices and storages, which do not constitute a module but are mounted separately.

Figure 2 further shows that, thanks to the disclosed asymmetrical positioning of the first energy module 10a, an angle 9a of a cardan shaft 9 relative to the front axle 5 may be decreased. This improves durability of the transmission.

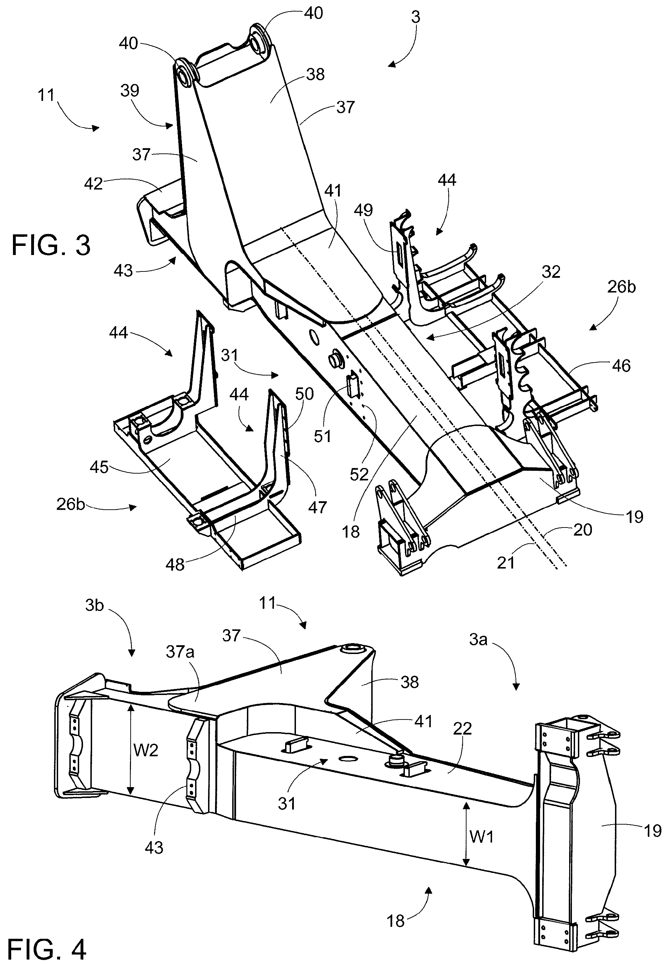

Figure 3 discloses a main frame 3, which has a longitudinal body part 18, a transverse body part 19 and a mounting bracket 11. As can be seen, the longitudinal body part 18 and the mounting bracket 11 may both have structures having closed outer shells, whereby they comprise box-like structures which are beneficial regarding withstanding and transmitting loads directed to the main frame 3 during the operation of a reach machine. The mounting bracket 11 may comprise side plates or bracket plates 37, a front plate 38 and a rear plate 39. At an upper portion of the mounting bracket 11 there may be connecting lugs 40 facing upwards and serving as boom connecting means.

The mounting bracket 11 may be integrated to be part of the structure of the longitudinal body part 18. The bracket plates 37 may be connected to inner or outer surfaces of side plates of the longitudinal body part. At a lower portion of the mounting bracket 11 there may also be an extension part 41 for improving transmission of loads between the mounting bracket 11 and the longitudinal portion 18. The mounting bracket 11 may be located symmetrically at the central axis 20 of the machine. However, at least the front part of the longitudinal body part 18 is located asymmetrically, whereby central axis 20 and 21 do not coincide. The rear most part of the main frame 3 may comprise support surfaces 42 for supporting a counter weight, and further, support surfaces 43 for mounting a rear axle setting.

Figure 3 further discloses that the main frame 3 may be provided with energy modules 10a, 10b, which may be mounted to lateral mounting places 31, 32 on the side surfaces of the front part of the longitudinal body part 18. The energy modules 10a, 10b comprise sub frames 26a, 26b, which be formed of two or more substantially L-shaped support elements 44. The support elements 44 are located at longitudinal distances from each other and may be connected to each other by means of a bottom plate 45 or any other connecting element 46 so that the sub frame can be handled as one piece having sufficient rigidity. The L-shaped support element 44 comprises a substantially vertical part 47 and a substantially horizontal part 48. An upper part of the vertical part 47 may be provided with one or more openings 49, which may be part of a first fastening system of the energy module. The vertical part 47 may also comprise several openings 50 allowing screw coupling and serving as a part of a second fastening system of the module. At the mounting places 31 and 32 there may be support surfaces, such as hook-elements 51, which are part of the first fastening system and allow the sub frame 26a, 26b to be supported initially by passing the hook-elements through the openings 49. The mounting places 31, 32 also comprise threaded openings 52 for receiving fastening screws and thereby serving as a part of the second fastening system.

Figure 4 shows that width W1 of the front portion of the longitudinal body part 18 is minor than width W2 of the rear part of the frame. As can be seen, a lower portion 37a of the bracket plate 37 may be fastened against an outer surface of a side plate of the longitudinal body part 18. The bracket plate 37 may extend to the bottom surface of the longitudinal body part 18. Further, the extension part 41 may provide a streamlined transition between the lower end of the mounting bracket and an upper surface of the longitudinal body part.

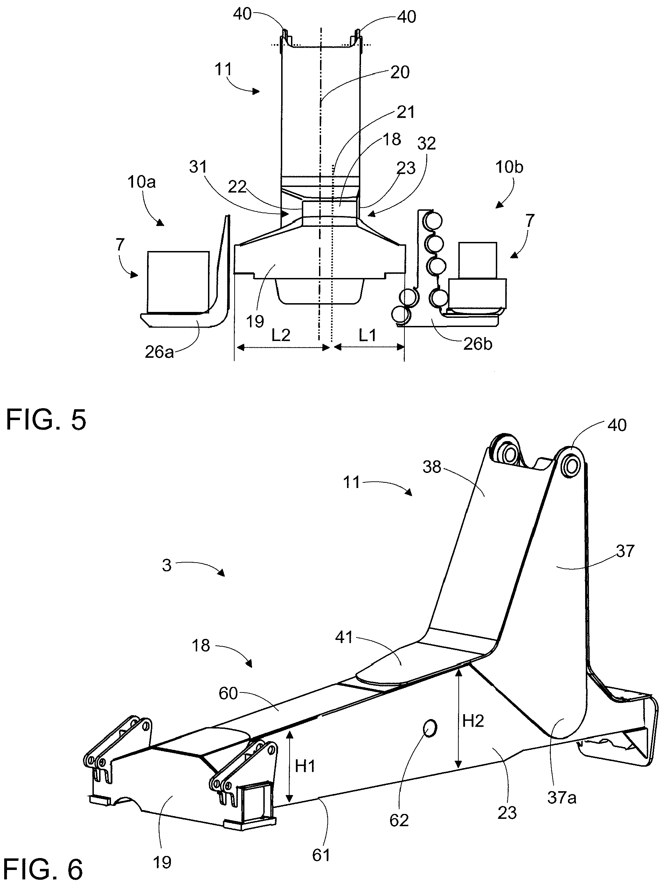

Figure 5 illustrates that the centre lines 20 and 21 are at a lateral distance from each other. Then, later distances L1 to L2 from ends of the transversal body part 19 to the central line 21 of the longitudinal body part 19 are different in size. Side surfaces 22 and 23 of the frame may be provided with energy modules 10a, 10b or with separately fastened components.

Figure 6 shows that an upper surface or plate 60 of the longitudinal body part 18 may be sloped so that height H1 at the front is minor than height H2 closer to the mounting bracket 11. A bottom surface or plate 61 may also be sloped or it may substantially horizontal in an operation position of the machine. Between the side plates 22 and 23 may be a tubular element 62, which may serve as a stiffener preventing buckling and may also serve as a lead-through for cables, tubes and hoses.

The drawings and the related description are only intended to illustrate the idea of the invention. In its details, the invention may vary within the scope of the claims.

## Claims

1. A frame of a mobile reach machine comprising:
a longitudinal body part (18), which has a front end (3a), a rear end (3b) and a centre line (21);
at least one mounting bracket (11), which is located at the rear end portion (3b) of the longitudinal body part and protrudes upwardly from an upper surface of the longitudinal body part, and is provided with boom connecting means (13);
a transversal body part (19), which is located at the front end portion (3a) of the longitudinal body part (18), and extends laterally relative to the longitudinal body part (18); and
at least a front part of the longitudinal body part (18) is located asymmetrically in relation to the transverse body part (19), whereby the centre line (21) of the front part of the longitudinal body part (18) is located at a lateral distance from a centre line (20) of the frame (3) passing in a longitudinal direction of the frame (3) through a middle point of the transversal body part (19).
**characterized in that**
the front part of the longitudinal body part (18) is provided with at least one lateral first side surface (22) and at least one lateral second side surface (23);
the first side surface (22) is located at a shorter distance from the centre line (20) of the frame (3) compared to the second side surface (23);
the first side surface (22) is provided with at least one first mounting place (31) for fastening at least one first module to the frame (3); and
the second side surface (23) is provided with at least one second mounting place (32) for fastening at least one second module to the frame (3).

2. The frame as claimed in claim 1, **characterized in that**
the asymmetrically located front part of the longitudinal body part (18) extends from the transverse body part (19) to the mounting bracket (11); and
the mounting bracket (11) and the rear part of the frame extending from the mounting bracket (11) towards the rear end of the frame are located symmetrically at the centre line (20) of the frame (3).

3. The frame as claimed in claim 1 or 2, **characterized in that**
the transverse body part (19) is provided with first mounting points configured to support at least one transversal rigid front axle (5) to the frame (3); and
the rear end portion of the frame comprises a second mounting points for connecting a steerable transversal rear axle setting (6) to the frame.

4. The frame as claimed in any one of the claims 1 to 3, **characterized in that**
the first side surface (22) is provided with at least one first mounting place (31) for fastening at least one first energy module (10a) to the frame (3); and
the second side surface (23) is provided with at least one second mounting place (32) for fastening at least one second energy module (10b) to the frame (3).

5. The frame as claimed in any one of the preceding claims 1 to 4, **characterized in that**
the longitudinal body part (18) is a tubular piece provided with a closed outer shell.

6. The frame as claimed in any one of the preceding claims 1 to 5, **characterized in that**
the mounting bracket (11) comprises two bracket plates (37) located at a transverse distance from each other; and
between the bracket plates (37) are several intermediate plates (38, 39), whereby the mounting bracket (11) has a closed outer shell structure.

7. The frame as claimed in any one of the preceding claims 1 to 6, **characterized in that**
the boom connecting means are located at a top part of the mounting bracket (11) and comprise a transverse opening passing through the mounting bracket, whereby the opening is configured to receive a connecting pin for connecting the boom (12) pivotally to the frame (3).

8. A mobile reach machine, comprising:
a movable carrier (2) provided with a frame (3) comprising a longitudinal body part (18) and a protruding mounting bracket (11) at a rear end portion of the frame;
a transversal rigid front axle (5) at a front end portion (3a) of the frame and being provided with at least two front wheels (4a);
a steerable transversal rear axle setting (6) at the rear end portion of the frame and being provided with at least two rear wheels (4b);
at least one power device (7) for generating operating power for the reach machine (1);
an elongated boom (12), which is located longitudinally above the frame (3), and which comprises a first end mounted pivotally to the mounting bracket (11), and a distal second end is provided with load carrying means (15);
at least one lifting actuator (14) for moving the boom (12) relative to the pivotal mounting whereby the second end of the boom is allowed to be lifted and lowered;
and wherein the frame (3) further comprises a transversal body part (19), which is located at the front end portion (3a) of the longitudinal body part and is configured to provide support for the front axle (5); and
at least the front portion of the longitudinal body part (18) of the frame is located asymmetrically in relation to the transversal body part (19), whereby the shape of the front part (3a) of the frame resembles asymmetric letter T when seen from above;
**characterized in that** the frame (3) is in accordance with claim 1.

9. The reach machine as claimed in claim 8, **characterized in that**
the mounting bracket (11) and a rear portion (3b) of the frame are located symmetrically at a longitudinal centre line (20) of the frame.
